# EUROPEAN PATENT APPLICATION

(11) **EP 2 211 213 A2**
(43) Date of publication of application: **28.07.2010**
(21) Application number: 10151061.8
(22) Date of filing: 19.01.2010
(51) Int. Cl.: G02B 6/04

(54) **Method for transferring images with incoherent randomly arranged fiber optical bundle and for displaying images with randomly arranged pixels**

(30) Priority: 21.01.2009 US 205355 P
(71) Applicant: Lara Pereira Monteiro, Sergio, Los Angeles CA 90025 (US)
(72) Inventor: Lara Pereira Monteiro, Sergio, Los Angeles CA 90025 (US)
(74) Representative: Becker Kurig Straus

(57) **Abstract**

A method and means to use randomly arranged fibers assembled together in a bundle that is capable of conveying images from an inaccessible location to a more accessible, convenient or safe location for viewing. Allows for mixing fibers of different diameters. Random distribution of fibers decreases the packing fraction, offering in exchange easiness of manufacturing and decrease in production cost. System can be also used for display units, including computer monitors, home TV, movie theatres, public display announcement boards, as airport, trains stations, highway instructions and billboard advertising. As display units, random assembled fibers are organized at the display end at the display shape, usually rectangular, from where light is emitted towards the viewer. At the illuminating end, light enters the individual fibers from multicolored lasers or other light sources which are controlled by single or multiple video boards and computers.

## Description

CROSS-REFERENCE TO RELATED APPLICATIONS This application claims priority to U.S. Provisional application Ser. No. 61/205,355, entitled "Method for generating images with a fiber optical bundle and new manufacturing system that requires no fixed positioning among the individual fibers" filed January 21, 2009, which is incorporated herein by reference in its entirety.

### FEDERALLY SPONSORED RESEARCH

Not applicable. Not a federally sponsored research.

### SEQUENCE LISTING OR PROGRAM

Not applicable.

### BACKGROUND OF THE INVENTION - field of Invention

The present invention relates to fiber optic bundles, fiber optics bundle systems, and to pixelized display systems. More specifically it relates to a random incoherent (see definition) bundles and bundle systems specifically designed for remote image transmission, or to work as an image carrying transmission medium from an inaccessible position to a more accessible position, as for endoscopes, and also as a display unit, e.g., computer monitors, public display systems or movie theatres using an fiber optics bundle.

### BACKGROUND - Discussion of Prior Art

Fiber optics are mostly transparent media with extremely small scattering and absorption, that are constructed in such a way that photons (light) entering one of its ends suffer total internal reflection on its internal surfaces, staying trapped within the fiber along its length - even if the fiber is bent. For and introduction to the field of fiber optics the reader is referred to Meyer-Arendt (Meyer-Arendt (1989)). Readers unfamiliar with total internal reflection are invited to familiarize themselves either using the reference cited or any other text that treats the subject.

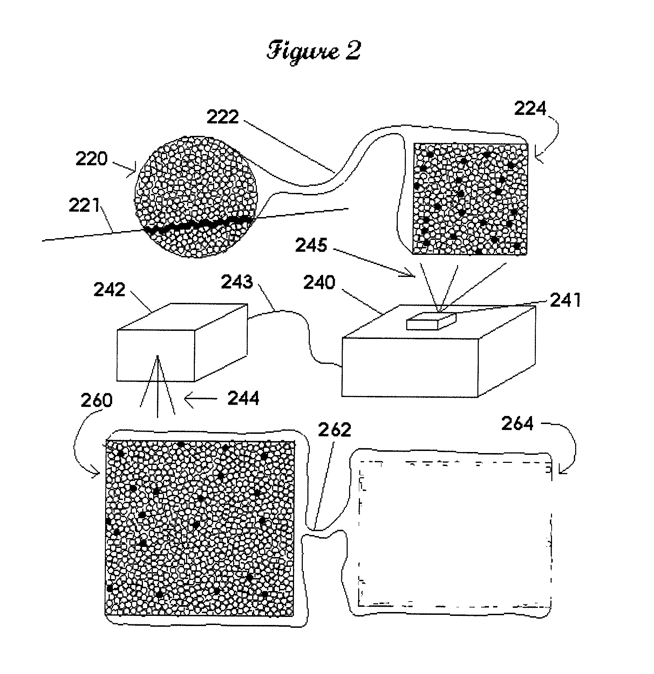

Fiber optical bundles, variously called endoscopes, boroscopes, etc., use optical fiber bundles to bring images from a distal end of the bundle (first extremity) to the proximal end of the bundle (second extremity). These bundles, which are usually composed of several thousands, or more, individual fibers, were originally manufactured in such a way that the relative position of each fiber to each other fiber were fixed, if not through the whole length of the bundle, at least the same relative position at both ends of the bundle, as displayed at figure 2. Bundles in which the relative position of each fiber at both ends is fixed with respect to others are said to be "coherent bundles" (see definition).

In contrast, there are optical fiber bundles in which the relative positions at both ends of the fibers to each other is arbitrary. These are said to be "non coherent bundles" or "incoherent bundles". Incoherent fiber bundles are in principle useless for image transmission, because the relative position of the image "pixels" changes from one end to another of the bundle. Traditionally non coherent bundles were used for illumination, while coherent bundles were used for imaging. This requirement to keep the relative position of all and each fiber the same at both ends of the bundle (coherent bundle) is difficult to achieve, and consequently the coherent bundles are expensive. Moreover, because of the difficulties associated with keeping the relative position of the fibers the same at both ends, coherent bundles are generally limited to a not more than a few tens of thousands fibers, which limits the image quality. Another part of the cost associated with the production of coherent fiber bundles is to keep the fiber arrangement as an orderly array, say, an hexagonal close-packed array, without which it would be virtually impossible to repeat the relative fiber positioning at both ends of the bundle. Prior art have recognized the former problem, the cost of producing a coherent bundle, but have not recognized the latter problem of an orderly arrangement, perhaps due to giving too much value to increase the packing fraction, which is important but not the only factor that matters.

One of the uses of fiber bundles is to inspect inaccessible locations. Endoscopes are widely used in medicine for inspection of the stomach (through the mouth), or the colon (through the anal orifice), and even minimally invasive surgery (Waye (2003), Block (2004), and Enomoto (2008)). One of the problems associated with endoscopes used in surgeries, or in the medical field in general, is the cost associated with keeping them sterile after use, and the degradation to the hardware due to the sterilization process. A decrease in the cost of these devices is needed and recognized by all involved. Gary Gust (Gust (2002)) attempted to solve this cost problem but in a way that is not as complete as the solution proposed in my invention. Gust disclosed two optical bundles, only the distal part of which is disposable, which is not a satisfactory solution.

Lin and Webb (Lin (2007), disclosed a very beautiful and imaginative solution but again, their bundle implies an orderly arrangement of fibers in the bundle, which is more expensive to make than a totally disordered, random arrangement. Besides, an ordered arrangement suffers from spatial aliasing, which is not addressed by Lin and Webb.

Calum MacAuley *et al.* (MacAulay (2003)) disclosed a fiber optics based microscope system, based on a bundle composed of an orderly array of fibers, which could have been made easier relaxing the orderly arrangement of fibers. See, e.g., figures 6A and 6B on MacAuley's patent.

Christopher Wiklof (Wiklof (2008)) discloses a scanning beam endoscope which differs from my partial scanning alternative embodiment in that in Wiklof's device only one point on the observed object is illuminated at a time, while the scanning disclosed in one of the alternative embodiments of my invention illuminates the full view at once.

Other proposed solutions are based on radio transmitting the image, as disclosed by Homan and Ohno (Homan (2008)), and Hidetake Segawa and Takeshi Yokoi (Segawa (2009)), a solution that at least fails to address the needs of minimally invasive surgery and is also of a different modality than my invention.

As an example of the fiber bundles, Schott Glass Works (Schott (n/d)), sells one bundle of fibers with diameter d-fiber = 8.5 micrometers, the bundle has diameter d-bundle = 1.0 mm, length L = 1 m = 1000 mm, with 12,000 fibers. The area of each fiber is A-fiber = 56.75 micrometers squared, the total area occupied by all the 12,000 fibers being A-allFibers = 0.681 mm squared, while the area of the bundle (diameter = 1 mm) is 0.785 mm squared, and the ratio between the total area of the 12,000 bundles to the area of the circular bundle is 0.867, the 13 % missing area being the space between the fibers, which, being circular in cross section cannot completely fill in the space. To achieve this packing, this bundle is laid on a hexagonal closed packed arrangement, which is the arrangement in which circles can be laid out maximizing the occupied area. The regular arrangement of the individual fibers hinders the manufacture of fibers with larger number of fibers, which would provide better resolution.

There is no intrinsic requirement for the fibers in a bundle to be arranged in an hexagonal arrangement, or in a x-y (or matrix or row-and-column) fashion, except that from the initial requirement that the fibers be with the same relative position among each other at both ends, a regular row-and-column arrangement was easier to repeat at both ends than an irregular arrangement of the fibers. An irregular relative arrangement among the individual fibers would be easier to assemble at the first end but it would be far more difficult (perhaps impossible) to repeat the same irregular arrangement at the second end for a coherent bundle, while the extra work to start with a regular arrangement at the first end was compensated by a far simpler work to repeat the same regular (and same relative position among all the fibers in the bundle) at the second end.

Another factor that must be taken into consideration is the packing factor, which is the fraction of the total cross section that is occupied by the fibers, excluding the cladding and the dead space between fibers. It turns out that hexagonal packaging is the optimum packaging for minimizing dead space between fibers, as was proven by Karl Friedrich Gauss. Yet, the release from an exacting hexagonal packaging can decrease manufacturing costs with minimal decrease in packing fraction, a factor that has not been taken into consideration by prior art. Also, if the repeat arrangement on both sides of the bundle is released, there is no reason for the fibers to be of the same diameter. With two or three different diameters, the smaller diameter can arrange themselves in between the larger ones, substantially decreasing the dead space in between fibers, as needed for good image.

This cost factor was partially addressed by McGowan, US patent # 6,524,237, February 25, 2003, (McGowan (2003)) which disclosed a method to recreate true, or correct, images from scrambled images conveyed by incoherent fiber bundles. McGowan method consists in making what he calls a map, which, for each fiber at position (xk, yk) at the distal (or first) end, associates another position (x'k, y'k) of the proximal (or second) end of the same fiber. McGowan called such association a map, because it maps the position at the second end to the position at the first end of the bundle. After light detection with a CCD or similar device, with the map, a computer can reposition each light appearing at the second (or proximal) extremity to its actual position at the first (or distal) extremity, that is, to recreate the true image from a scrambled light distribution at the accessible proximal extremity. Unfortunately McGowan invention assumes, as shown in his drawings and description, a regular arrangement of the fibers, which is still expensive to produce. McGowan's invention succeeds in somewhat decreasing the cost of the bundle, but fails to carry the process to its ultimate possibility of fibers arranged in a random arrangement at both ends.

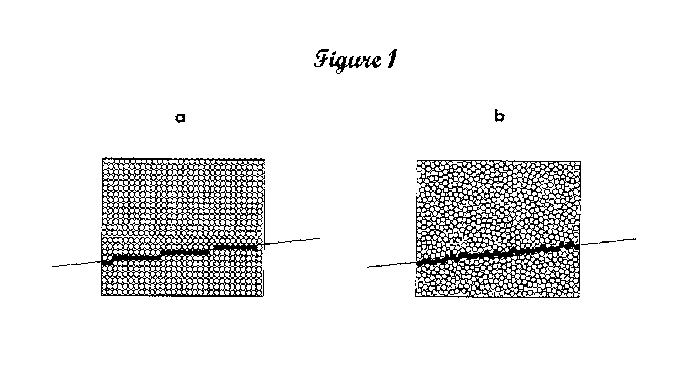

Moreover, and this is a stronger disadvantage in McGowan's invention, one which requires improvement, it suffers from the spatial quantization problem, from the impossibility of both detecting and displaying intermediate positions between any of the fixed rows and columns that form the fiber array - because the individual fibers (pixels) exist only along certain rows and columns! This problem is seen, for example, on the display on a computer monitor, which is constructed from a row-column array of pixels, of a slightly slanted line, say 5 degrees with the horizontal or vertical direction: such lines are displayed as a stair-case with long steps. Figure 1 (a and b) displays both the old art display (a) and a random pixel display (b) described in my invention.

Such system leads to another potential fault, which is that truly horizontal (vertical) lines of the same width are sometimes displayed with two pixels width, sometimes with one pixel width, depending on the particular position of said line with respect to the measuring pixels, creating a misleading impression on the human observer that one line is thicker than the other. Both defects exist in McGowan's invention because of the fixed x-y pixel grid. The same defect exists in many existing display system, as the ordinary VGA, SVGA, etc. computer monitors.

Indeed, not only did McGowan failed to disclose the possibility of each individual fiber to be in any arbitrary relative arrangement among themselves, but all his drawings disclose fibers that are on a regular x-y arrangement of perfect rows and columns. This arrangement is a left over from coherent bundles, in which the relative position of all fibers are generally if not always identical at both ends because it is easier to repeat the relative positioning if each end is at a regular arrangement than if they are at the same random arrangement. In other words, it is actually easier to achieve the same relative fiber arrangement with a regular arrangement than with a random arrangement, so the coherent bundle is normally built with a regular arrangement of the individual fibers (x-y, or matrix like). Consequently, though McGowan's invention does indeed decrease the manufacturing cost of the optical system, because it relaxes the need of a coherent bundle, it still requires a bundle that is relatively expensive, for being uniform in arrangement at each end of the bundle. My invention releases this constraint of McGowan's invention, further facilitating the manufacturing process and further decreasing the price of the endoscopic system, as well as addresses the aliasing problem.

### OBJECTS AND ADVANTAGES

Accordingly, several objects and advantages of my invention are the relaxing of one further expensive step in the manufacturing process of fiber optics bundles for image transmission, the regular arrangement of the fibers at the ends of the bundle, when comparing with existing art, thereby reducing the fabrication cost of said fiber bundles.

Another object of my invention is to make easier to produce said fiber bundles.

Another objective of my invention is to disclose a novel fiber bundle that is capable of displaying small variations of-x or-y changes on lines or edges when compared with current art (neighboring dots are not at a fixed vertical or horizontal displacement from each other).

Still another object of my invention is to use the randomly-arranged fibers in the bundle to produce a display, as a monitor or a public announcement board, which displays the image with randomly arranged pixels.

Still another object of my invention is to decrease aliasing caused by pixelized displays on a regular x-y arrangement.

Further objects and advantages of my invention will become apparent from a consideration of the drawings and ensuing description.

### SUMMARY

A bundle of optical fibers randomly distributed at both ends of the bundle, making an incoherent and disordered optical fiber bundle. The randomly arranged fiber bundle with the method of reconstructing the image can be used both to capture an image from an inaccessible location and bring it to an accessible location, or it can be used to organize a display, as on a computer monitor, TV, movie theatre or the like. Used as a display the bundle offers the advantage that a disorganized, or randomly arranged display pixels forestall the existence of lines along with there is no image, which is responsible for the stair-like display of lines forming a small angle with either the horizontal or vertical lines on a standard computer monitor or many printers. A bundle with randomly arranged fibers is also cheaper to manufacture, causing the system to become competitive at public display units, public announcing boards and movie theatres.

### DRAWINGS

Figure 1 (a and b). Show two computer monitor displays, (a) is old art, pixels on an x-y arrangement, (b) is a display of my invention, with pixels randomly positioned on the screen. A slightly slanted line is displayed as a "stair-case" in old art monitors (a) and a more continuous line in a monitor of my invention.
Figure 2 shows a complete view of the main embodiment of my invention: the image of a line 221 over the first, or distal end 221 of the randomly arranged extremity of the observation bundle of my invention, the random light distribution on the second, or proximal, randomly arranged extremity (224), the image reconfiguration computer (240) with video board and translation/rotation motor controllers, the light sources, translational/rotational motors and steering mirrors (in box 242), the illuminated first, or distal randomly arranged extremity of the display bundle of my invention (260), and finally, the image displayed at the second, of proximal extremity of the display bundle of my invention (264).

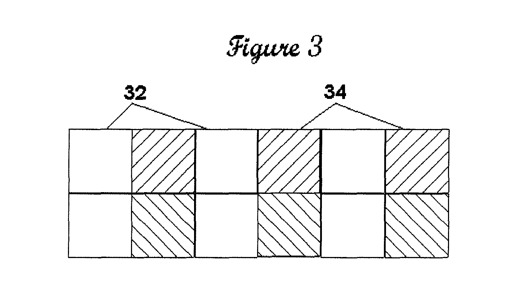

Figure 3. Six reading pixels, labeled 32 and the dead zones that correspond to each, next to each, labeled 34. The pixel area does not have to be square and the dead zone does not have to have the same surface area as the detector area. Typically the dead zone is somewhat smaller than the detecting area, as it is a detracting feature, though its area is not usually negligible when compared with the live detecting area. CCDs with same areas for the detector and the electronics can be manufactured, releasing some of the constraints on their construction, if the dead area is measured on a second path as disclosed in this variation of my invention. In this variation the detector is moved sideways just enough so that detector 32 covers, on a second reading, the dead area 34, of its adjoining detector pixel. After this second reading the whole detector is moved back to its initial position, etc.

### DRAWINGS - List of Reference Numerals

32 - Light sensitive area in CCD
34 - Dead area in CCD, which contains the capacitors, transistors, etc for each pixel.
220 - First extremity of first bundle (may be in an inaccessible location).
221 - Image of object (a line) projected onto first extremity of first bundle.
222 - First fiber bundle.
224 - Second extremity of first bundle.
240 - Computer, video card.
241 - CCD camera light distribution on 224.
242 - translation/rotation motors, beam steering mirrors and other necessary optics, as lenses, and lasers or other beam light sources.
243 - wires and cables connecting computer 240 to control positioning motors, lasers, etc in box 242.
244 - Scanning light beams illuminating 260.
245 - Light rays into CCD camera 241.
260 - First extremity of second bundle (the second, or display bundle of my invention).
262 - Second fiber bundle.
264 - Second extremity of second bundle.

### DETAILED DESCRIPTION

I start with a succinct description suitable for engineers and scientists, which omits details, yet describes the most important at least, if not all the features of my invention, followed by a detailed description. This succinct description also serves to show the forest before the trees, to show the overall connection of the system before entering in its details.

### Description of my invention for engineers and scientists:

My invention consists of a first incoherent fiber optics bundle 222 with randomly arranged fibers in the bundle, including the bundle extremities, as shown in figure 2, to capture an image from an inaccessible location and bring to an accessible location information to reconstruct the image from the inaccessible location, and a second incoherent fiber optics bundle 262 also with randomly arranged fibers in the bundle, including the bundle extremities, to form a display device, the ends of which produce the ordinary image pixels 264 producing a display as shown in figure 2. These two parts may be used together or separately, and the main embodiment of my invention consists of both together. The first incoherent bundle 222, with randomly arranged fibers 220 and 224 at both ends, has a first extremity, which is positioned at the difficult to access location, and a second extremity, which is located at a place easy to access, from where information is accessed to retrieve the true image at the face of the first extremity 220. The second incoherent bundle 262, also with randomly arranged fibers at both ends, also has a first extremity 260, where a computer 240 or equivalent device receives the pixel distribution 224 from a CCD camera (not shown) or equivalent device then, using a method described further down recreates in memory the information for the true image projected on the first extremity 220 of the first bundle, then, controlling one or more stearable light beam(s) in box 242, not shown, causes light to enter each of the fibers at the first extremity 260 of the second fiber bundle 262 separately, that is, one fiber at a time. The illuminated fibers at the first extremity 260 of bundle 262 are selected using the fiber map described below, which is a process to cause the appropriate image to be displayed on the second extremity 264 of bundle 262. Said light beans may be of different colors as to create, when mixed, the visual impression of substantially all colors on the eye of a human subject that is looking at the second extremity 264 of said bundle, which works as a computer monitor or public display. Such color mixing is similar to the RGB process used by standard current art computer monitors, or the three phosphorous light emitting molecules on the original TV sets.

The physical part of my invention needs a calibration procedure for it to work properly, which is done as described now. The process is the same for the first bundle 222 and the second bundle 262. In its best implementation a light beam (e.g., from a laser, but not necessarily from a laser), the position of which is controlled by a computer, and so focused as to have a diameter smaller than each fiber in the bundle at its first extremity (220 and 260), scans the first, or distal, end of the fiber bundle (222 and 262), searching for the center of each fiber. Once the center position of a fiber is found, a CCD or other type of imaging device captures the image of the second, or proximal end of the fiber bundle (224 and 264), which image is transferred to a computer for analysis. The computer, according to a pre-written program, determines the position on the second, or proximal, end of the bundle where the light is emerging, and the controlling computer assigns the first (or distal) position to the second (or proximal) position. This is repeated for all fibers until all the fibers in the bundle (222 and 262) are illuminated in the first extremity (220 and 260), thus generating a map that correlates each position on the second extremity (224 and 264) to a position on the first extremity (220 and 260) of the bundle (222 and 262).

In the preferred embodiment a laser beam scans completely over the area of one of the extremities of the fiber bundle, as described in the sequel; assume this to be the distal or first extremity. The proximal, or second, extremity of the fiber bundle is in front of an optical system that forms an image of it on a CCD or similar detector array with the necessary resolution to distinguish individual fibers, the image of which is analyzed by a computer as described in the sequel. The laser scanning system works as follows. Under computer control and following some pre-determined system that is devised in order to hit every single fiber at the distal extremity, the laser beam, using any of the standards methods known by the practitioners of the art of computer control, scans the distal end of the fiber bundle (220 and 260) until the image of the second or proximal extremity (224 and 264), as detected on the CCD, indicates that the laser is illuminating one and only one of the fibers. This is determined to be the case when one and only one fiber shows light on the second or proximal extremity. The relative position within the bundle is different at the proximal extremity, but if only one fiber is illuminated at the distal end then one and only one fiber emits light at the proximal end on the CCD. Once such a position is found that illuminates one and only one of the fibers at the first extremity 220 and 260, the computer causes the laser beam to move up until the image, as detected on the CCD, shows that another fiber starts receiving light. This is the highest position the laser can go while still totally inside the fiber; the computer stores the value of this y-coordinate. The laser beam is then moved down until the image, as detected on the CCD, shows that another fiber starts receiving light. This is the lowest position the laser can go while still totally inside the fiber; the computer stores the value of this y-coordinate. The average of these two y-coordinates is the y-coordinate of the center of the fiber; call this yl. The laser beam is moved to the vertical coordinate y1 and then is moved to the left until the image, as detected on the CCD, shows that another fiber starts receiving light. This is the leftmost position the laser beam can go while still totally inside the fiber; the computer stores the value of this x-coordinate. The laser beam is then moved to the right until the image, as detected on the CCD, shows that another fiber starts receiving light. This is the rightmost position the laser beam can go while still totally inside the fiber; the computer stores the value of this x-coordinate. The average of these two x-coordinates is the x-coordinate of the center of the fiber; call this xl. (x1, y1) is the coordinates of the center of fiber labeled 1, or the position of fiber 1 on the first extremity 220 or 260. The coordinates of the other end (second or proximal extremity) of fiber 1 are determined by the software that examines the image of it created by the CCD; call this coordinates (x'1, y'1). With these two coordinates, when in later use, the computer "knows" that any light appearing at (x'1, y'1) on the second or proximal extremity 224 and 264 of the bundle is actually a light located at position (x1, y1) at the object side, or distal, or first extremity 220 and 260. Following some predetermined method, part of the computer program, the laser beam is moved across all the fibers composing the first or distal extremity 220 and 260, then each time a new fiber is found the process described above is followed to determine the coordinates of its center (xk, yk) and (x'k, y'k) at the distal and proximal extremity, respectively. After scanning the whole area of the first or distal extremity, the computer is able to associate the true position (xk, yk) of light at the object side of the bundle (of first or distal extremity) for every light exiting the bundle at the second or proximal side (x'k, y'k), for all values of the index k. The coordinates (xk, yk) are substituted by the controlling computer by the coordinates (x'k, y'k), which is the unscrambled image. This set of coordinate pairs, which associates all points on the second extremity to all points on the first extremity is peculiar to each bundle, and will be permanent, as long as the fiber endings are kept fixed by any of the standard means of the old art.

The preferred embodiment displays the image 221 captured at the proximal extremity 220 on a display that is also made of randomly positioned pixels 264. This part of my invention works in the same way as described for the image capturing. The computer needs to have another map of the relative positions of the randomly located pixels on the display, call it the second, or proximal extremity, to the first, or distal extremity of the displaying fibers. With this second map, under the control of a computer, three lasers, or LEDs, or any other light sources, can be moved to insert light in the first, or distal ending of the display fibers 260, which are so calculated as to reproduce the desired image, in color and brightness, on the second, or proximal extremity of the display fibers 264. Said lasers, LEDs, or the like needs to be of any three colors capable of being combined to make the physiological sensation of all the natural colors detected by humans. The ordinary RGB (red, green, blue) is a possibility, but many others are possible, as red, yellow and blue, for example. A particular point on the image may contribute to more than one pixel on the display, and several schemes are possible to make this assignment, which are not part of my invention. For example, if a particular image point spans 30% of a certain pixel on the display device and 70% of an adjoining pixel, these may receive 30% and 70% of the light. Other more sophisticated schemes are also possible.

### Detailed description of my invention:

Figure 2 shows a preferred embodiment of my invention with a relatively small number of fibers to simplify the drawing, the discussion and the analysis. Normally a bundle 222 and 262 using my invention will have several million fibers, or, at least, several hundreds thousands fibers (the resolution of a modem computer monitor is at least 1280 by 1024, or 1.3 million pixels, or of a modern digital camera at 5 to 7 megapixels). This larger number of fibers is possible because of the relative random positioning of them. The individual fibers in the bundle are held in close proximity, as tightly as possible, in a random or pseudo-random arrangement. A small amount of glue may also be used at the bundle extremities in the main embodiment, to contribute to hold the individual fibers in a fixed position relative to each other, yet not so much glue as to keep the fibers from being close together. Such glue must have the appropriate index of refraction so as not to spoil the total internal reflection, which is a detail that is not part of my invention and is well known by the practitioners of the art and is theoretically explained by the tunneling effect.

The individual fiber that forms the bundle of my invention are randomly arranged at the distal (or first) end 220 and 260, randomly arranged along the bundle, and randomly arranged at the proximal (or second) end 224 and 264. This substantially simplifies the fabrication of the bundle when compared with earlier, prior art bundles that require some particular arrangement of the fibers.

Continuing from said first or distal end 220 and 260, the relative position of each individual fiber need not be fixed relative to each other, nor do the manufacturing process needs to keep track of where each fiber went along the bundle. The bundle can be perfectly mixed in any random way with no need to keep track of the position mixing. This is in contrast with prior art, which requires that either (1) the relative position of the fibers at the second or proximal end be exactly as at the first of distal end (coherent bundle), or that (2) the relative position of the individual fibers be a regular x-y or brick-like arrangement (McGowan (2003)). Relaxing this requirement of keeping track of a large number of small diameter, delicate fibers to be either the same at both ends, or to be a regular x-y or brick-like arrangement makes the production of the bundle less expensive and have other optical advantages described elsewhere in this disclosure.

Moreover, the random fiber arrangement at the extremities of the bundle prevents the existence of any line along which there is no fibers, which is a source of image distortion, as lines on the image that happens to be along a line of fibers and centered at the edge of some row of fibers, between one row and another, while of thickness smaller than the fiber diameter, would either not be represented or else represented sometimes by one line some other times by two lines of pixels (or fiber endings), which would be thicker than the actual line, distorting the image in either case. This source of image distortion is particularly disrupting on the display.

The main embodiment requires the determination of the relative position with respect to the bundles 222 and 262 at both ends (first or distal, 220 or 260 and second or proximal 224 or 264 respectively) of all individual fibers in the bundle: fiber 1 is at coordinates (x1, y1) at the distal end, and coordinates (x'1, y'1) at the proximal end, fiber 2 is at coordinates (x2, y2) at the distal end, and coordinates (x'2, y'2) at the proximal end, etc, for all fibers composing the bundle. For the purposes of this invention, the position of the fibers in the bundle are defined to be in Cartesian coordinates with two orthogonal axis arbitrarily marked on each end (distal and proximal). For each fiber "k" the position of its distal end (xk, yk) and the position of its proximal end (x'k, y'k) must be measured for the particular bundle. In figure 2 k runs from 1 to a little over 100, the small number of fibers composing the bundle in this simplified figure. In the sequel it follows the description of a method used for the main embodiment to determine the numerical values of all the coordinates (xn, yn) and (x'n, y'n). This determination of the relative position of the fiber endings is necessary for both parts of my invention, that is, for the image capture bundle 222 and for the display bundle unit 262, which makes the equivalent of a computer monitor or public announcement board.

To determine the coordinates at the distal or first extremity 220 and 260, the main embodiment makes use of a translation table, or a rotation device, or a deflecting mirror, or a combination of these (not shown), or any device that can move the light beam (not shown) over the whole surface of the distal end 220 and 260 of the bundle 222 and 262. The laser beam is such that it is capable of being focused by a converging lens or lens system (not shown), to a diameter smaller than the diameter of the fibers in the bundle, preferably, but not necessarily so, 1/5 or less of the fiber diameter, which is the value used for the main embodiment. In the main embodiment the fibers are 8 micrometers in diameter (see Schott (n/d)), and the laser beam is focused to a 1.5 micrometer diameter spot or less, which is well within the possibilities of current art of optics and lasers. The focal length of the lens (or lens system) is such that the beam divergence is small enough that the emerging beam (after the focal point) does not violate the angle condition for total internal reflection inside the fiber. Both values are well within current art of manufacture.

The bundle is positioned in such a way that its distal fibers can receive the beam. Small deviations of these conditions are acceptable, as known to the practitioners of the art, as long as the laser beam couples with (enters) the fibers not at such an angle as to fail the conditions of total internal reflection inside the fiber. The resolution of the beam moving device must be smaller than the diameter of the fibers, preferably less than 1/10 of the fiber diameter. In the main embodiment the diameter of the individual fibers is 8 micrometers, making the translation table resolution equal to 0.8 micrometers, both conditions easily met by current technology, but these values are not restrictive to my invention, smaller and larger fibers being within the scope of my invention, and scanning translation/rotation tables with less resolution that 1/10 of the fiber diameter are acceptable, these values being only suggestions for the main embodiment, as will appreciated by the practitioners of the art. This condition on the laser beam diameter are familiar to the practitioners of the art of optics and lasers, and have to do, among other things, with the fact that the laser beam intensity actually only *drops* in intensity exponentially outwards from its center point, what is known as the beam diameter usually being defined as the distance from its center, where the intensity drops to 1/e, approximately 35% of its center value, which means that there is laser light energy beyond and outside the defined laser beam diameter.

The "method to use the bundle to produce images from [an] incoherent bundle", which consists in de-scrambling the light emerging from the proximal side 224 of the bundle 222, which is the side from which the hidden object is observed, consists on associating the position of each fiber at one end of the bundle to the position of the same fiber at the other end of the bundle. Thereafter, the scrambled image appearing at the second (or proximal) extremity 224 of the bundle 222 can be de-scrambled because the function that associates the proximal extremity position to the distal extremity position allows the computer to associate the correct pixel position at the distal or image fiber ending to the proximal, or detection ending of the fiber for all the fibers at the proximal extremity of the bundle. For the purposes of this invention, and in opposition to previous art, besides being an incoherent bundle, the fibers need not even be at any ordered arrangement, as an x-y, or matrix-like, or brick-like wall arrangement, or hexagonal close-packed arrangement, but are supposed to be arranged in a totally random fashion. In reality a random fiber arrangement produces a better image than a regular arrangement, because this latter fails to have pixels, or image points, along all lines that falls in between each of the populated rows or columns, which become dead regions for imaging purposes, which does not happen with a random distribution of pixels or image points. Mathematically this is described as spatial aliasing. This association of the position of each fiber at both ends of the bundle is made illuminating each fiber in turn at one extremity (first, or distal extremity 220) then observing the point where the light emerges on the other (second of proximal 224) extremity, which is projected on a CCD or similar pixelized device, which image is transferred to a controlling computer that also controls the position of the laser beam impinging on the first or distal extremity of the bundle. For the main embodiment, the illumination at the distal extremity is made with a "small" pencil of light, which is made to move over the surface of the distal extremity until the beam illuminates a single fiber at the first, or distal extremity. This condition is determined by the appearance of light from one single fiber at the second, or proximal extremity 224, which is imaged on a CCD or similar device. Once the laser beam illuminates one single fiber, the computer causes its position to move until said illuminating pencil of light reaches the ends of the fiber at left, then at right (not necessarily along its horizontal diameter), then at the top, then at the bottom (also not necessarily along its vertical diameter), from which four coordinates the coordinate of the center of the fiber can be calculated, (x, y), the x-coordinate of the fiber center being the average of the leftmost and rightmost x coordinates as defined above, and the γ-coordinate of the fiber center being the average of the uppermost and lowermost y coordinates as defined above, this coordinates of the center of the fiber being the position of the fiber. At this point the computer has determined that the fiber which emits light at the second, or proximal extremity 224, with known coordinates (x'k, y'k), as determined by the CCD image transferred to the computer, corresponds to the point (xk, yk) on the first, or distal extremity 220. The process is repeated until all the fibers are found this way and a total map is obtained. This map is characteristic of a particular bundle and is subsequently used to de-scramble the image appearing at the proximal extremity of the bundle, by assigning all the light seen at the proximal extremity to its original position at the distal extremity, which is the true image or else to illuminate the first extremity 260 of the projection bundle 262 in such a way as to produce a desired image on 264, as shown on figure 2.

The main embodiment uses a display with randomly located pixels 264, each of which is the end of another fiber bundle 262, which needs to be also mapped using the same, or similar process used to map the observing bundle 222. The mapping of the display pixels will not be described here because it is the same process as used to map the observing bundle. The display system in the main embodiment works with the proximal endings of the display fibers pointing towards the viewer, in such a way that light is emitted from the monitor or display surface towards the viewer.

It is envisaged that fiber endings at the second extremity 264, or proximal end, of the display of the main embodiment, have their endings somewhat concave (outwardly bowing) and also subjected to micro-abrasion, so as to be rough, in order to scatter light towards many directions, which allows the viewer to be located at an angle with the perpendicular to the display device.

### Operation of Invention

I will provide first a succinct description suitable for an engineer/physicist, which omits many details, yet sets the general overall mechanism of operation of my invention, which is probably enough for a competent engineer/physicist to repeat the invention filling in details, followed by a detailed explanation which contains more details.

### Operation of my invention, version for engineers and scientists:

Viewed at the first or distal extremity 220 of the first or observing fiber bundle 222, which is positioned at the focal plane of my invention's optical system, there is an image of the object 221, that is, a light distribution that in all aspects closely mimics the light distribution of a plane, 2 dimensional, flat view of object, similar to what is captured by the light detector of a photographic camera or video camera or to the light distribution on the retina of any animal's eye. The possible deviations between the images being due to optical aberrations, lens imperfections, accumulated dirty on the optical elements and the like.

Viewed at the second or proximal end 224 of the first, or observing fiber bundle 222, there is a random light distribution, corresponding to no recognizable image, as shown in figure 2. This is because the light distribution on the image plane becomes totally scrambled at the proximal extremity 224 of the fiber bundle 222 (the side that is accessible) because the relative position of the fibers is different than their counterparts at the first or distal extremity. The light distribution at the distal end 220 of the bundle 222 is not repeated at its proximal end 224, and the image projected on 220 is not repeated at the proximal end 224, which displays only a random pattern of light.

The operation of my invention is based on two steps: first is a discovery phase, in which a functional relationship is determined, which assigns the position at the distal (or first) extremity 220 of every fiber in the bundle 222 to its position at the proximal (or second) extremity 224. This functional assignment is particular to each fiber bundle.

Once this functional assignment is known, and it has to be measured one time only for each individual bundle, when in later use a computer receives the light distribution at the proximal (or second) extremity 224, which is an accessible end of the bundle, then, using the functional assignment above, reassigns every color and every light intensity at every point at the proximal extremity to its position at the distal (or first) extremity 220, which is the correct position of that particular light pixel on the image.

The fiber of my invention can be made with a random distribution of fibers at both extremities, that is, a non-regular, no pattern fiber lay out. A random distribution of fibers prevents the possibility of an image with lines that follows a particular line of fibers, in which case the image could take either one or two lines on the fiber bundle, causing similar lines to appear to be of different widths. A random distribution prevents the appearance of aliasing in the images,

The second part of my invention uses another fiber bundle 262, the first or distal side 260 of which receives light from a laser or other collimated source, one source if it is a monochrome display, or three sources of three different colors to produce colored images, said collimated sources being provided with means to scan the distal end of the fibers at 260. The controlling computer, or its video board, adjusts the position and intensity of each light source in such a way that the proximal end 264 of each fiber reproduces the color and intensity of light needed to produce the desired image. Typically the display have a rectangular shape, as shown in figure 2.

### Operation of my invention, detailed version:

In order to make sense of the scrambled light distribution appearing at the proximal (or second) extremity 224 of the observing bundle 222, an image of this light distribution is projected with an ordinary optical system on a CCD detector (not shown, or any of its equivalent), which is then transferred to a microcomputer 240 as seen schematically in figure 2. Computer 240 is also fed with the particular functional assignment, peculiar to that particular observing fiber bundle 222, which assigns the position of the fiber at the distal end 220 of the bundle 222 for all endings at the proximal (or second) extremity 224. Following a stored program, the microcomputer then reassigns the light distribution as detected by said CCD at the proximal extremity 224 of the bundle to its location at the distal extremity 220 of the same bundle, point-by-point, according to the fiber endings map or functional assignment that characterize the particular bundle. This procedure therefore reassigns the light distribution appearing at the proximal extremity 224 of the observing bundle (which is accessible) to the light distribution at the distal extremity 220 (which is not accessible), and which is a true image of the inaccessible object 221. Once the computer has, under the control of a program, reassigned the light distribution at the distal extremity of the observing bundle, it proceeds to display the corrected light distribution at the proximal extremity of the display bundle which functions as a standard computer monitor. This is the correct, unscrambled image.

The preferred embodiment of my invention uses another randomized fiber optics bundle 262 for display, which receives light from a white light source, or from three or more colored sources at its distal extremity 260, which is transferred to its proximal extremity 264, which is the display. Once the computer has the correct image as described above, it causes light beams of the appropriate colors to illuminate the distal ends 260 of the appropriate display fibers 262, in order that the proximal ends 264 of the display fibers reproduce the image originally projected on the distal extremity 220 of the observing bundle 222, as shown in part d of figure 2.

### Description and Operation of Alternative Embodiments

An alternative embodiment of my invention uses the fiber bundle of my invention to capture an image at an inaccessible location then uses any of the available display technology, as a standard VGA, or SVGA, or plasma display, etc., or a computer projection display, as used in conference presentations, or a large-audience screen, as in an airport, or a sports stadium, which creates the image with any of the existing technologies, including LEDs, etc.

Another alternative embodiment of my invention uses an optical fiber 262 to form a display device with randomly positioned fibers at the display side but with an old art coherent fiber bundle to capture the image 221, in which case there is no need to de-scramble the image at the proximal extremity of the imaging bundle but there is the need to de-scramble the fiber display bundle 262.

Another alternative embodiment of my invention is a large display for public display of information, as in airports, train stations, and the like, or even the very large displays used in conferences with very large attendance, which are fitted with a video camera to capture the image of the speaker, which is then displayed behind the speaker and at such a size that all in the conference room can see comfortably, or even larger displays as used in sports stadiums or outdoor announcements. In these situations it is only the fiber optics display bundle 262 that is functional, as this alternative dispenses with the need of a small fiber to enter some inaccessible location. In this embodiment, the advantage over prior art is that prior art uses a light source at each of the display pixels, often three LEDs (red, green and blue), which often is marginally bright enough and also typically the pixels are large enough to cause the displayed image to appear grainy. My invention is capable of making the public display systems with pixels as small as 8 micrometers using currently available technology, smaller in the future, which is far smaller than is needed for public or outdoor displays. The actual pixel size, which is the diameter of the proximal extremity of the display fiber depends on the viewing distance, and it is chosen appropriately as needed. Typically a few thousands pixels on each direction (x and y, or horizontal and vertical), as 1,400 by 1,200 or more will produce an acceptable quality picture for the viewers, but my invention is not bound to this resolution, higher and lower resolution being also acceptable, depending on the situation.

Another alternative embodiment is to use the display only part of my invention to create the images in a movie theatre. Current technology of digital movies projects the movie with pixels that have less resolution than traditional 35 mm movies, while my invention is capable of resolutions as small as the smallest available fibers, or 10 micrometers, far smaller than the necessary for a movie theater that is viewed at more than 5 or 10 meters at minimum. The resolution for a movie theater depends on the distance of the closest viewer. In such a variation, it is envisaged that more than one computer is needed to work in parallel to move the larger number of beams necessary to create an image with the required larger resolution. For example, one computer may receive the necessary information from a DVD for the left side of the screen, while a second computer receives the necessary information for the right side of the screen. Persons skilled in the art will notice that the number of computer is not limited to two.

Another alternative embodiment is to use the fiber bundle of my invention as part of a light pipe used in current technology only to bring light to windowless rooms and hallways in buildings to save energy (Wright (2000)). Most people do not like to stay in such rooms because there is a disconnection between them and the world, a problem which is not addressed by the current art to bring outside light to the room. With an imaging conveying bundle as disclosed in my invention, a true image from the outside of the building, light and view, can be brought in then projected on some wall, which would bring a variable light, depending on the outdoor situation, as full sunlight or rain or night view. During the day it would obviate the need to turn lights on, as current art does, saving energy, while day and night, sunny or rainy days, it would bring a connection to the world, causing the people inside to feel better. The image may be the view on the grounds around the building, which would be projected on a wall, or the sky above the building, which would be projected on the ceiling of the room. The images could be projected or the fiber endings could emit light out from the wall or ceiling.

Another alternative embodiment of my invention uses a single fiber, instead of a fiber observation bundle, which fiber is moved on the image plane of an optical system at the distal extremity, under the control of a microcomputer, all as described in the main embodiment, except that instead of a plurality of fibers (a fiber bundle 222) there is one single fiber which takes as many positions as desired, controlled by a moving system, under the control of a microcomputer. At the proximal end there is also a single fiber, the light emerging from it being measured by the same microcomputer that controls the motion of the fiber's distal end using an appropriate light detector attached to it by the usual means, which is capable of measuring the color and intensity of the light emerging from the proximal end for all positions of the fiber at the distal extremity as it moves. The controlling microcomputer then assigns that light as originating from the current position of that fiber at the distal end. Preferably the motion at the distal end would be fast, to generate a continuously changing image, but this is not necessary, a succession of snapshots being acceptable for certain applications too. Such a system has the advantage of smaller diameter along the cable that connects the distal and the proximal extremities of the device, because there is one single fiber instead of a multiplicity of fibers, and the wires for motion control are few only, such that even when their sizes are added to the single image fiber the whole diameter is still smaller than the diameter of a fiber bundle.

A variation of the alternative disclosed above with a single moving fiber to scan the image area, is to use a fiber bundle which has a cross section smaller than the desired image area, then combine the fiber bundle with the process disclosed above, moving the fiber bundle across the image plane to capture not one image point at a time, but a section of the total image at a time. The bundle cross-sectional area does not have to be circular, as in figure 2, nor does the inner used area have to be square. The only restriction is that the fiber has to perform such a path that every point in the image area is scrutinized by some fiber in the bundle.

Another possible embodiment is a system which is exactly as the main embodiment but which is fitted with motion controls at the distal extremity of the imaging fiber 222, that is capable of moving the whole bundle by a fraction of the diameter of the fibers. A second image taken after the distal fiber ending is moved by half a fiber diameter produces another picture that contains the light distribution at the dead spots in-between fibers. In such an embodiment ulterior software processing can merge the two images into a single image which contains more details than each image individually.

Another variation of the alternative disclosed above with a single moving fiber to scan the image area, is to use a fiber bundle 222 that scans the whole image area at once but the CCD is mounted on a supporting structure capable of moving it sideways in such a way as to position the actual light sensitive area of the CCD (or similar detector) over the dead area previously occupied by the electronics, capacitors, etc., needed for the functioning of the CCD. This is shown at figure 3 with a square CCD composed of 6 pixels only for simplicity. Typical dimensions for the sensitive area on a CCD is 20 by 20 micrometers, with the adjoining dead area, which is needed to place the necessary reading and storing electronics, being slightly smaller. Consequently the sideways motion of the CCD is of the order of 10 micrometers (varying depending on the particular CCD), easily within the possibilities of current technology. The motion can be made, for example, by a piezoelectric crystal, on which is mounted the CCD. Piezoelectric crystals used as devices to cause small, controlled, well repetitive and accurate motion is a well established art, known to the practitioners of the art. This variation of my invention is not bound to the use as a piezoelectric crystal to move the CCD, any other device serving as well, this being a well established art in industry, the piezoelectric crystal serving as ) an example only. Another example of small, limited, well controlled motion, of the same order of magnitude needed for this variation of my invention is the motion of the laser pencil used to read CDs and DVDs.

The arrangement of the individual fibers at the first and second extremities can be totally random, as in figure 2, or a matrix-like array, or a row-wise staggered array, or a hexagonal close-packed array, as in current art, or any other ordered array. It is also possible to mix these, *loosely* arranging the fibers on a hexagonal close-packed array, while allowing for frequent positioning errors, which maximizes the packing area, while not keeping this requirement to be valid at larger distances. Relinquishing the long-range arrangement, or allowing for large number of mispositioning of the fibers, can substantially decrease the production cost while still maintaining most of the advantages of the increased number of fibers per unit area.

An alternative embodiment of my invention uses an incoherent fiber bundle that is orderly arranged at one extremity but disorderly arranged at the other extremity.

Another alternative embodiment of my invention uses an incoherent fiber bundle that is orderly arranged at both extremities.

Another alternative embodiment of my invention makes the functional assignment of the position of each fiber at the distal extremity of the bundle with a device that keeps the laser beam and the optical system fixed in space and moves the bundle up-and-down (y direction) and left-and-right (x direction) in front of the fixed focused laser beam. Such a motion is carried in an equivalent manner as described for the main embodiment, until the center of each fiber is detected, and making using of an imaging system that creates an image of the proximal (or second) extremity on a CCD-type detector (or one of its equivalents), which in turn determines the position within the bundle from where light is emerging from the bundle, which position is then the position of the proximal extremity of the same fiber illuminated at the distal extremity.

Another alternative embodiment of my invention makes use of a small detector, which is able to collect light from a small area only, which area is similar or smaller than the diameter of an individual fiber in the bundle. Instead of an optical system projecting the image of the proximal (or second) extremity on a CCD-type detector, there is an x-y translation table which is capable of translating this small detector in front of the proximal end of the bundle, on a plane perpendicular to the direction of the fiber's ending at the proximal extremity. Under the control of a microcomputer, this small detector is then translated along x- and y- coordinates, while one and only one fiber is being illuminated at the distal extremity, until the center of the fiber is found which brings light to the proximal extremity of the bundle. The determination of the center of the fiber can be made using the same or a different method as described in the main embodiment to determine the center of the fiber at the distal extremity.

Another alternative embodiment of my invention uses a single, small, movable light detector instead of a CCD to determine the coordinates of the illuminated fiber at the proximal end of the bundle. Instead of a small, single detector it can also use a single fiber optic strand capable of receiving light from a small area only, which area is smaller than the cross-sectional area of each fiber in the bundle. This single fiber optic strand receives light at one end and is connected to a photodetector at the other end, which is capable of measuring light intensity. This fiber optic is then mounted on an x-y translation table (or R-theta, polar coordinates) and moved, under the control of a microcomputer, up-and-down (y coordinate) and left-and-right (x coordinate) in front of the proximal extremity of the bundle while one and only one fiber is being illuminated at the distal extremity, until it detects light at some particular position. The translation table then moves along x- and y- directions to determine the coordinates of the center of the fiber from which light is emerging at the proximal end, which are the proximal extremity coordinates for the functional mapping described in the main embodiment.

An alternative embodiment of my invention makes use of manually controlled translation tables to adjust the position of the laser beam at the distal extremity, as described on the main embodiment, it not being necessary that the motion be controlled by a microcomputer for the determination of the position of each fiber, but only that one fiber is illuminated at a time.

An alternative embodiment of my invention makes use of a manually activated translation table to adjust the position of the small detector at the proximal end, as described as one of the alternative embodiment, it not being necessary that the motion be controlled by a microcomputer for the determination of the position of fiber that is emitting light at the proximal end, but only that its x- and y- coordinates are determined.

An alternative embodiment of my invention makes use of computer controlled or manually controlled translation tables that translates on a polar coordinate system (R and theta, or radial and angular respectively), it not being necessary that the motion be along a Cartesian coordinate system, but only that the relative position of all fibers at both ends be determined in any of the available coordinate systems.

Another alternative embodiment of my invention is to use incoherent fiber bundles to build monitors, similar to computer monitors, or large panels, of the types recently being marketed for medium sized indoor or large outdoor displays with high power LEDs. There exist many technologies to produce display monitors and large crowd display units, some examples of which are CRT (cathode ray tube), LCD (liquid crystal display), LED and high brightness LED, etc. In this case, in which the fiber bundle is used for a display, instead of for a reading device (instead of a conduit for an image from an inaccessible location to an accessible location), a number, usually large, of optical fibers, are arranged to have their distal extremities perpendicular to some surface on a desired area over which someone desires to display something, text or pictures, or both. It is possible that for especial applications the display surface is not flat, as well as that the fibers do not have their ends perpendicular to the surface. These situations could occur, for example, if there were viewers from different directions. To display image both forward and obliquely, the proximal ending of the display fiber could be so shaped as to scatter light in the desired directions, forward and obliquely, for example, having the fiber extremities at the proximal end with an hemispherical shape and perhaps also microabrased.

For this application a microcomputer controls three laser beams, one red, one green, the other blue, (RGB) which are scanned with an x-y table over the proximal endings of a bundle, the distal end of which is at the place where the image is to be seen, forming the image pixels. The microcomputer also controls the light intensity of the three colored lasers (RGB) while it moves each beam over the proximal extremity of each fiber composing the bundle. The display could be a computer monitor or a large indoor or outdoor panel. Also there could exist more than one beam of each color working in parallel, to more easily cover the whole area in the time necessary to create the impression of continuous motion, two, three, four or more beams being possible, and more than one computer controlling them.

For this alternative use of my invention, the first phase, that creates the functional assignment between the position of the individual fibers at the proximal and distal extremities is the same as the main embodiment or one of its variations as disclosed. Preferably the proximal extremity, which is located at the display side, has the individual fibers arranged on a random fashion, because this is less expensive to manufacture and also because this forestalls the existence of dead lines, along which there is no display pixels, but this is not necessary for my invention to operate. Preferably the fibers at the distal extremity, which are located near the light sources (red/green/blue) are also arranged on a random fashion, because it is easy to manufacture bundles that are random as opposed to orderly arranged, but this is not restrictive to my invention to operate.

Finally, there is no need to have separate optical fibers for each of the three colors typically used for display - red, green and blue. All the three primary colors can share the same fibers - as long as the repetition rate of each is faster than the human eye retention time. This sharing of the optical fibers brings another advantage, which is that the image pixels can be made smaller than present art which uses one dedicated pixel for each color. Using three separate pixels, as three LEDs, for example, current light forces the pixel to be three times as large as it would have to be, therefore decreasing the spatial resolution and perhaps causing the image to appear grainy. Indeed, in current art systems, in which each color is emitted at the display by its dedicated device, the position used by the green and the blue dots or pixels cannot be used by the red dot or pixel, and the same for the other two colors, which increases the distance between pixels, decreasing image resolution. The individual RGB pixels can be seen on older, coarser computer monitors, with a magnifying lens, and on a white area one can see all three colors at each pixel. Looking at the red, green and blue pixels on an old ordinary computer monitor one can see that the pixels can be brought closer together if there were no dedicated pixels for each color. Likewise, the three pixels can be seen looking at street or public places display devices. Modem computer monitors have too fine a display to individually see the pixels with an average magnifier, it being necessary a good lens system to see the individual pixels. This visibility of the three colored individual pixels in current art does not exist with my invention, which produces a better, smoother image than current art. The new digital movie theater projection systems have observable pixels, which is improved with my invention.

Another variation of my invention is a display system as described above, with the distal extremities of the fibers ending on a semispherical shape that is also rough in finishing. The rough finishing of the fibers cause that the emitted light is emitted on all forward 2 * pi steroradians directions, that is on all directions forward of the panel. The roughness can also be controlled so as more light is emitted within a certain angle, say 10 degrees from the perpendicular to the display plane, while less light is emitted along directions away from it. Or the roughness at the fiber end can project a certain amount of light forward with a variable decreasing amount of light at progressively larger angles, as needed for any particular application. Several variations can be used as needed for a particular application.

Other alternative variations of my invention are to have the individual fibers tapered to a smaller or to a larger diameter at one of the extremities, as needed to adjust the required pixel size both for reading (observing bundle), and for display (display bundle). This could be desirable for several reasons. One reason is to better couple the fiber to larger sized light detectors. For example, the individual fibers at the distal (or first or image side) could be 10 micrometers in diameter also 10 micrometers along its full length, but they could taper to a 100 micrometers diameter to better match a CCD detector at the proximal (or second side). For the display aspect of the invention, the proximal extremity, which is the side where the image is displayed, should taper to whatever size is desirable for the particular viewing distance. A very large street display system, more than 10 meters wide by more than 2 meters high for example, could use fibers tapered to 2 mm, in which case it would still use 5,000 pixels on the horizontal by 1,000 pixels on the vertical direction, or 5.0 megapixels, a reasonably good resolution, better than the resolution with existing high brightness LEDs. For a personal computer monitor display, on the other hand, the current art of 1,600 horizontal pixels on a 34 cm wide screen has pixels spaced by 212 micrometers, so a 50 micrometers fiber optics at the display extremity would have 7,000 pixels on the horizontal direction, which is far better than current art and still well within the production capabilities of fiber optics, and a home TV screen 100 cm wide (approximately 3 ft) with the same 50 micrometers fiber would offer 20,000 pixels resolution on the horizontal direction, which is a virtually continuous image. Also, whenever size is not a constraint, it may be better to use larger diameter fibers at the distal end of a display-type system (say 200 micrometers or more) to receive the light from a laser source for the display variation of my invention, because this facilitates the light coupling from the laser to the fiber. The fiber could then decrease in diameter to 100 micrometers only to taper again at the display extremity to 2 mm. for another reason.

### Conclusion, Ramifications, and Scope of Invention

During calibration, instead of moving the laser beam across the distal end of a fixed fiber bundle, one can have a fixed laser beam while the distal end of the fiber bundle is moved in frond of the laser beam, the two situations being equivalent for the objective of illuminating one fiber at a time.

The bundle does not have to be circular in cross section, but it can be elliptical, square, in the shape of a parallelogram, or any arbitrary shape to fit particular imaging situations.

The bundle does not have to be a single bundle, but it can be segmented. In the illustrative figures with this patent applicatio the number of fibers in the bundle is low for purposes of illustration, a real case being composed of many more fibers than illustrated. In all cases, whether the sub-bundles contain the same fibers at both ends or not, it is possible to have several CCD detectors which can detect a part of the image which can then be combined in software for a larger image. This variation allows for faster imaging processing, as separate CPUs (Central Processing Unit) can be dedicated to each of the segments.

The bundle for the monitor or for the indoor or outdoor display does not have to be a single bundle, but can be a composite of several bundles, which together form a complete and larger display unit. Moreover, contrary to existing large display units which are formed by a multiplicity of individual CRT (Cathode Ray Tube) or LCD (Liquid Crystal Display), the distal endings of the bundles do not need the frame that is necessary for the CRTs or LCDs, which causes that there are separators between each individual panel, causing a lack of continuity on the displayed image, interfering with the image interpretation; the fiber ending can be continuous across the display. The continuity of the fiber endings at the display side is made easier by relaxing, as my invention does, the condition of regular (or brick-like arrangement) of the fiber endings. The number of fibers in a unit of display is determined by the speed of the microcomputer that controls it, and by the speed of the beam motion that can be achieved, still creating a few dozen images per second needed to create the visual impression of continuous motion. For an individual computer monitor, which is generally controlled by a single microcomputer, the motion and intensity of the laser beams (RGB) are under control of the video card, which could have multiple processors if needed. For an indoor or outdoor display, several microcomputers may be used, or a combination of these and microcontrollers, or of these and DSP (digital Signal Processors), any of these with the objective of distributing the computer power needed to control the laser beam motion and intensity controls.

Another variation of that the fiber bundle and moving device of my invention is that the light beam motion is not created by translation motion (Cartesian x-y or polar R-theta) but by a mirror that receives the light beam from a fixed direction then turns in three axles to reflect the light towards a multiplicity of points by independently and under microcomputer control rotating on two different, non-parallel axis.

The fiber bundle and moving device of my invention as described in the variation above, in which the incident beam is moved to different points on the mirror, which then add a second level of positioning of the light beam, by rotating, as described above. Such a combination can add to the reach of the beam and to the speed of its motion too. This is valid for both the calibration phase of the viewing bundle and for the display device, which works under the constraint of producing a refreshing rate that is larger than the image retention rate of the retina.

The fiber bundle and moving device of my invention as described in the above two variations, in which the beam is deflected by one first mirror which can be rotated on one or two axles, after which it hits a second mirror at a variable angle, as determined by the first mirror, this second mirror being also able to rotate around two axles, adding to the final positioning. Such double deflection can be used to cause a larger total angular deflection of the light beam.

### SEQUENCE LISTING

Not applicable. No sequence listing

### REFERENCES

Block (2004) Herthold Block, Guido Schachschal and Hartmut Schmidt "Endoscopy of the Upper GI Tract - A Training Manual", Thieme (2004)
Enomoto (2008) Takayuki Enomoto, "Endoscope" US Patent no. 7,440,005, October 21, 2008
Gust (2002) Gust *et al*., "Endoscopic surgical procedures and endoscopic apparatus comprising segmented fiber optic cables" US patent no. 6,432,047 August 13, 2002,
Homan (2008), Masatoshi Homan and Wataru Ohno "Capsule endoscope apparatus" US Patent no. 7,452,328, November 18, 2008
Lin (2007), Charles Lin and Robert Webb, "Fiber-coupled multiplexed confocal microscope" US patent no. 7,292,390, November 6, 2007
MacAulay (2003) Calum MacAuley *et al*., "Methods and apparatus for imaging using a light guide bundle and a spatial light modulator" US patent no. 6,663,560, Dec. 16, 2003.
McGowan (2003), Steven McGowan, "Method and apparatus for using non-coherent optical bundles for image transmission" US patent no. 6,524,237, Februrary 25, 2003
Meyer-Arendt (1989) "Modern Optics" (all three editions of it explain the fundamentals of total internal reflection and fiber optics)
Segawa (2009), Hidetake Segawa and Takeshi Yokoi "Assembling method of capsule medical apparatus", US patent no. 7,473,218, January 6, 2009
Schott (n/d) http://www.us.schott.com/lightingimaging/english/products/healthcare/imagingfiberoptics/flexibl ecomponents/leached.html
Waye (2003) Jerome Waye, Douglas Rex and Christopher Williams (eds.) "Colonoscopy - Principles and Practice", Blackwell Publishing (2003)
Wiklof (2008) Christopher Wiklof "Scanned beam imagers and endoscopes with positionable light collector", US patent no. 7,435,217, October 14, 2008
Wright (2000) Michael Wright and Mukul Patel "How Things Work Today" (2000) pg. 29

### DEFINITIONS

Coherent fiber bundle. A bundle of optical fibers in which the relative arrangement of each and all fibers is exactly the same at both ends of the fiber bundle. Figure FIGNN is an example of such a bundle. In a coherent bundle if fiber 1 is to the left of fiber 2 and below fiber 3 at one extremity of the bundle, then the other end of fiber 1 is also to the left and under the other end of fibers 2 and 3, respectively.

Incoherent fiber bundle. A bundle of fibers in which the relative arrangement of the fibers is not the same at both ends of the bundle. In an incoherent bundle, if fiber 1 is immediately to the left of fiber 2 at one extremity of the bundle, it is not necessarily so at the other extremity, and usually it will not be immediately to the left nor even next to fiber 2 at all. Incoherent fiber bundles can have the fibers on a pattern, e.g., x-y (matrix-like), or hexagonal close-packed or else an incoherent fiber bundle can have the fibers randomly distributed.

## Claims

1. An optical system based on a bundle of optical fibers capable of total internal reflection having a first extremity and a second extremity, and bound together at said first and second extremities, to convey an image from a first inaccessible location where said first extremity is placed, to a second accessible location, where said second extremity is placed, comprising of:
(a) an optical system composed of mirrors and lenses that projects an image of a difficult to access object on the face of said first extremity of said bundle, (b) an incoherent bundle of fibers in which the fibers are randomly arranged at both said first and second extremities, and (c) a method to reorganize the scrambled light distribution conveyed to the second extremity of said bundle to the light distribution that displays the true image impinging on the first extremity of said bundle.

2. The bundle of claim 1 in which said fibers at one of the extremities are randomly arranged while said fibers at the other extremity are arranged on an ordered array, as in a hexagonal closed-packed or other arrangement.

3. The bundle of claim 1 in which said method to reorganize said image conveyed from said first extremity to said second extremity of said incoherent, randomly organized fiber bundle is a one-to-one map which is determined illuminating one of said fibers at one of its extremities at a time, while registering its position in some coordinate system, while observing the position where said illumination appears at the other extremity, also registering its position in some coordinate system, said one-to-one map being the set of positions, recorded in an appropriate coordinate system, that associates the position of each fiber at one said extremity to the position of same fiber at the other extremity,

4. The bundle of claim 1 in which a computer receives the light distribution at said second extremity recorded by a CCD or other light detector, and using said map or method to reorganize the scrambled light distribution conveyed to the second extremity of said bundle, reorganize the spatial distribution of said light at said second extremity of said bundle to said light distribution at said first extremity of said fiber optics bundle, which is the true image impinging on said first extremity of said fiber bundle.

5. An image display device composed of (a) an incoherent bundle of randomly arranged optical fibers having a first extremity and a second extremity, to convey light from a first location where said first extremity is placed, to a second location, where said second extremity is placed, said second extremity being organized to work as a display surface of images and texts, (b) a method to decide how to illuminate said first extremity with light beams in such a way that the light emerging from said second extremity forms images and texts as needed,

6. The bundle of claim 5 in which said method to decide how to illuminate said first extremity of said second incoherent, randomly organized fiber bundle is a one-to-one map which is determined illuminating one of said fibers at one of its extremities at a time, while registering its position in some coordinate system, while observing the position where said illumination appears at the other extremity, also registering its position in some coordinate system, said one-to-one map being the set of positions, recorded in an appropriate coordinate system, that associates the position of each fiber at one said extremity to the position of same fiber at the other extremity,

7. The fiber bundle and image display of claim 5 where said light beams are of different colors and capable of mixing to produce in humans the visual impression of other colors besides their natural colors, particularly being of the set red-green-blue and capable of producing in humans the visual impression of most colors perceived by humans.

8. The fiber bundle and image display of claim 5 further fitted with a set of colored light beams capable of being focused at the first extremity of each said optical fibers in such a way that said colored light beams enter said optical fibers at such an angle as to suffer total internal reflection inside it, one fiber at a time, then moved to another fiber and so on, to scan all said optical fibers, so that said colored lights emerge from said second extremities, the combination of said colored lights being able to substantially generate most colors perceived by the human eye.

9. The fiber bundle and image display of claim 5 further fitted with a set of computer controlled motors capable to translate and rotate mirrors and other light steering and focusing devices, which are capable to point and focus said colored light beams to any of said first extremities of said fiber bundle, in such a way that one said fiber is illuminated at a time by one of said colored light beams, said computer being also attached to means to control the brightness of each said colored light beams

10. The fiber bundle and image device of claim 5 such that said light beams are generated by laser diodes of the colors red, green and blue.

11. The fiber bundle and image device of claim 5 in which said display device is one of the set of a computer monitor, a TV set, a public display announcing board and a movie theater screen

12. An image capture and display device composed of (a) a first bundle of incoherent, randomly arranged optical fibers approximately of the same length and bound together at both ends, having a first extremity and a second extremity, to convey an image from a first inaccessible location where said first extremity is placed, to a second accessible location, where said second extremity is placed, (b) an optical system with lenses and mirrors capable of projecting an image of a desirable object onto said first extremity of said first bundle of optical fibers, (c) a method to reorganize the scrambled light distribution conveyed to the second extremity of said first bundle to the light distribution that displays the true image impinging on the first extremity of said bundle, (d) a second bundle of incoherent, randomly arranged optical fibers having a first extremity and a second extremity, to convey light entering at said first extremity of each said fibers of said second bundle, so that said light entering said first extremity of said second bundle emerges at said second extremity of said second bundle, said light emerging from said second extremity being so organized as to display any particular desired image, (e) a set of colored light beams such that the combination of them in color and intensity is capable of producing the visual impression of substantially all colors perceived by humans, (f) a set of mirrors and lenses attached to translation and rotation devices capable of being controlled by a computer, which is capable of focusing each said colored light beam on each said fibers of said fiber bundle, one at a time, (g) a method determine how to illuminate said first extremities of said second fiber bundle in such a way that the light emerging at said second extremities of said second fiber bundle reproduces the image impinging on said first extremity of said first fiber bundle which is generally in an inaccessible location.

13. The image capture and display device of claim 12 where said inaccessible location where said first extremity of said first fiber bundle is located is some desirable view to the outside of a building, where the image is captured by said first fiber bundle, and said second extremity of said second fiber bundle is a windowless room or hallway in said building, which is then illuminated by said image captured by said first extremity of said first fiber bundle which is projected on a wall or on the ceiling, on which is creates the impression of a window to an outside view or to the sky respectively, with a view to said outside location of said building while also providing illumination to said room or hallway.

14. The image capture and display device of claim 12 where said inaccessible location where said first extremity of said first fiber bundle is located is some desirable view to the outside of a building, where the image is captured by said first fiber bundle, and said second extremity of said second fiber bundle is a windowless room or hallway in said building, which is then illuminated by said image captured by said first extremity of said first fiber bundle which is displayed on a wall screen or on the ceiling, where said image can be viewed directly as a TV screen where it creates the impression of a window with a view to said outside location of said building or to the outside sky respectively, while also providing illumination to said room or hallway.

15. The image capture and display device of claim 12 where the first extremity of said first fiber bundle is positioned very close to the object to cause said system to work as a microscope.
